# NOUVEAU FASCICULE DE BREVET EUROPEEN

(11) **EP 1 463 904 B2**
(45) Date de publication et mention de la décision concernant l'opposition: **07.08.2019**
(45) Mention de la délivrance du brevet: 01.08.2012
(21) Numéro de dépôt: 02801092.4
(22) Date de dépôt: 03.12.2002
(51) Int. Cl.: F16L 59/02

(54) **GAINE DE PROTECTION REFERMABLE PAR RECOUVREMENT ET UTILISATION DE CETTE GAINE**
DURCH ÜBERLAPPEN WIEDERVERSCHLIESSBARE SCHUTZHÜLLE UND VERWENDUNG DAVON
PROTECTIVE SHEATH RECLOSABLE BY OVERLAPPING AND USE THEREOF

(30) Priorité: 18.12.2001 FR 0116376
(43) Date de publication de la demande: 06.10.2004
(73) Titulaire: Federal Mogul Systems Protection, 60800 Crépy-en-Valois (FR)
(72) Inventeur: FERRAND, Jean, F-60800 Crépy-en-Valois (FR)
(74) Mandataire: Santarelli
(86) Numéro de dépôt international: PCT/FR2002/004147
(87) Numéro de publication internationale: WO 2003/054438

(56) Documents cités:
- EP-A1- 0 779 466
- EP-A1- 1 063 747
- EP-A1- 1 063 747
- EP-A2- 0 299 626
- WO-A1-00/46543
- CH-A5- 573 083
- DE-A1- 2 052 271
- DE-A1- 3 211 796
- DE-U1- 20 021 786
- DE-U1- 29 510 907
- DE-U1- 29 711 387
- FR-A1- 2 745 962
- JP-A- H11 205 945
- US-A- 5 123 453
- MARKEL CORP: "Polyester wrap sleevings", ANNOUNCEMENT MARKEL, XX, XX, 1 January 1999 (1999-01-01), page 1, XP003002526,

## Description

La présente invention concerne une gaine de protection refermable par recouvrement.

Il est connu d'utiliser des gaines refermables pour la protection d'éléments allongés, comme des faisceaux de câbles électriques, des câbles de commande ou encore des conduites ou durits, utilisés couramment dans les véhicules automobiles.

Ces gaines ont pour objet de protéger mécaniquement, et parfois acoustiquement, les éléments allongés de l'environnement extérieur.

En outre, elles permettent de maintenir ces éléments allongés ensemble, notamment, lorsqu'il s'agit de faisceaux de câbles électriques ou de commande.

Afin de faciliter la mise en place d'une gaine de protection sur un élément allongé, on utilise une gaine sensiblement tubulaire, fendue longitudinalement, de telle sorte qu'elle peut être ouverte, puis refermée après positionnement dans la longueur d'un élément allongé.

Cette gaine est par exemple en textile, du type en polyester tissé ou tressé. Elle peut être conformée de telle sorte qu'au repos, elle se présente comme une gaine tubulaire refermée grâce à une portion de recouvrement dans laquelle les deux bords longitudinaux de la gaine sont superposés. Une telle gaine est dite auto-fermable.

Cependant, bien que cette gaine soit auto-fermable, il est parfois nécessaire, afin de s'assurer que la gaine reste effectivement bien fermée, de l'enrubanner à distance régulière dans sa longueur, par exemple avec un ruban adhésif ou encore de positionner des clips de fixation dans sa longueur.

En outre, il est nécessaire d'éviter le déplacement en translation de ces gaines le long de l'élément allongé, et notamment le long des tronçons droits de cet élément allongé.

On place alors fréquemment une portion de ruban adhésif à chaque extrémité de la gaine de telle sorte que l'adhésif chevauche la gaine et l'élément allongé qu'elle protège.

On connaît également un élément de protection tel que décrit dans le document EP 1 063 747 qui présente une surface adhésive collée sur l'intégralité du pourtour d'un faisceau de câbles.

La présente invention a pour but de résoudre les inconvénients précités et de proposer une gaine de protection refermable par recouvrement qui puisse être à la fois fermée et maintenue en place sur un élément allongé sans requérir de la part de l'opérateur un grand nombre d'interventions accessoires.

A cet effet, la présente invention vise une gaine de protection refermable par recouvrement telle que définie dans la revendication 1.

Ainsi, grâce à la présence de moyens adhésifs sur la face interne de la gaine, il est possible dans un même temps de fermer la gaine dans la portion de recouvrement, grâce à l'adhésif présent entre le bord longitudinal extérieur et le bord longitudinal intérieur de la portion de recouvrement, et de fixer cette gaine sur les éléments qu'elle protège, grâce à une portion des moyens adhésifs qui s'étend au-delà de la portion de recouvrement, et se trouve donc en vis-à-vis des éléments qu'elle protège.

Lors de la mise en place de cette gaine de protection, on obtient ainsi une fermeture fiable de cette gaine, même dans les portions où elle est fortement sollicitée, et notamment dans les portions courbes.

En outre, toute translation de cette gaine le long d'un élément allongé qu'elle protège est évitée grâce à la présence d'adhésifs au-delà de la portion de recouvrement.

Grâce à la présence des moyens adhésifs sur une largeur importante de la face interne de la gaine, il est possible d'obtenir à fois la fermeture de la gaine et sa fixation sur l'élément allongé quel que soit le diamètre de cet élément allongé, et par conséquent, quelle que soit la largeur de la portion de recouvrement des bords longitudinaux de la gaine.

De préférence, ces moyens adhésifs s'étendent sur une portion de face interne de largeur sensiblement égale à 1/3 de la largeur de la gaine.

La présente invention vise également, dans un second aspect, l'utilisation d'une gaine de protection refermable conforme à l'invention, pour protéger au moins un élément allongé, et notamment un faisceau de câbles ou une conduite.

Le montage de cette gaine refermable sur un élément allongé, et notamment des composants d'un véhicule automobile, est grandement facilité et ne requiert par l'utilisation d'accessoires pour maintenir cette gaine en position, telle qu'un ruban adhésif ou différents clips de montage.

D'autres particularités et avantages de l'invention apparaîtront encore dans la description ci-après.

Aux dessins annexés, donnés à titre d'exemples non limitatifs :
- la figure 1 est une vue en perspective d'une gaine de protection conforme à un premier mode de réalisation de l'invention, la gaine de protection étant maintenue en position ouverte ;
- la figure 2 est une vue en perspective de la gaine de la figure 1 en positon auto-fermée ;
- la figure 3 est une vue analogue à la figure 2 dans laquelle la gaine de protection est montée sur un faisceau de câble ;
- la figure 4 est une vue en perspective d'une gaine de protection conforme à un second mode de réalisation de l'invention, la gaine de protection étant maintenue en position ouverte ; et
- la figure 5 est une vue en perspective de la gaine de protection de la figure 4 en position auto-fermée.

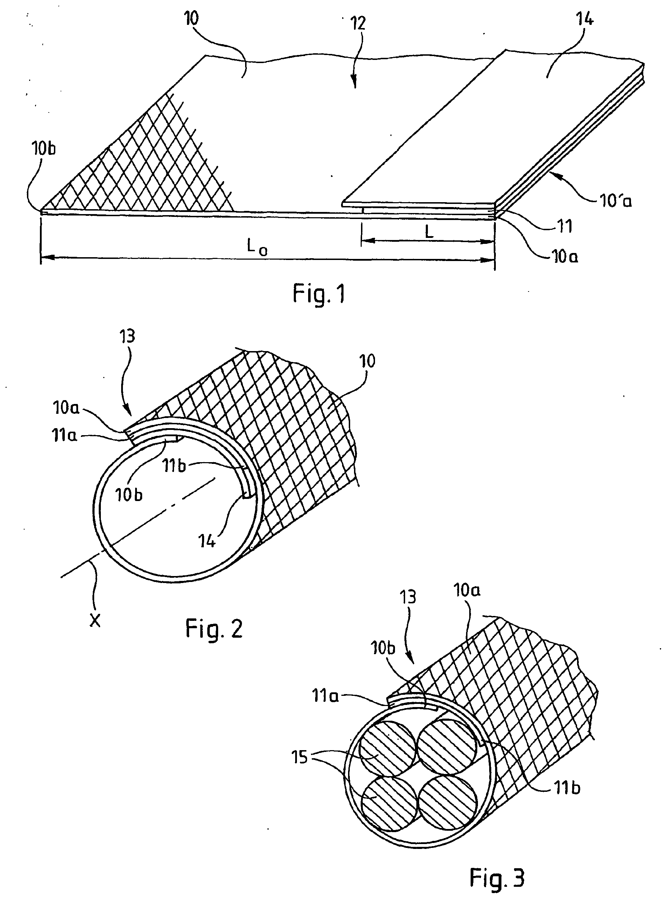

On va décrire tout d'abord en référence aux figures 1 à 3 un premier mode de réalisation d'une gaine de protection refermable par recouvrement.

Ici, cette gaine de protection 10 est auto-fermable, c'est-à-dire qu'au repos (sans sollicitation extérieure), elle se présente sous la forme d'une gaine tubulaire fendue longitudinalement.

Ici, cette gaine de protection 10 est réalisée à partir d'un fil de polyester tissé.

Bien entendu, d'autres matériaux tels que des fibres de verre peuvent être utilisés. Les fils peuvent être des monofilaments ou des multifilaments, ou encore un mélange de ces derniers. La structure peut être obtenue par tissage, tressage, tricotage,...

Comme bien illustré à la figure 2, cette gaine de protection auto-fermable est refermée suivant son axe longitudinal X, de telle sorte que les bords longitudinaux de la gaine viennent en recouvrement l'un sur l'autre.

Comme bien illustré à la figure 2, un bord longitudinal extérieur 10a est adapté à recouvrir un bord longitudinal intérieur 10b lorsque la gaine de protection est dans sa position auto-fermée.

Au repos, la gaine de protection peut se présenter dans sa position auto-fermée dès lors que la structure tissée est réalisée sous forme tubulaire ou bien encore, qu'une opération de thermo-formage est appliquée à une bande textile plane pour conformer celle-ci sous forme tubulaire.

Des moyens adhésifs 11 sont fixés sur une face interne 12 de la gaine.

Ici, ces moyens adhésifs 11 sont constitués d'une bande adhésive qui s'étend dans la direction longitudinale X de la gaine. Ils sont disposés sur une face interne 12, au niveau du bord longitudinal extérieur 10a. De préférence, cette bande adhésive 11 s'étend à proximité du bord libre 10'a du bord longitudinal extérieur 10a de la portion de recouvrement 13 de la gaine.

Bien que cette bande adhésive 11 soit représentée de telle sorte qu'elle s'étende en continu le long du bord longitudinal 10a de la gaine 10, les moyens adhésifs pourraient également être constitués de différentes portions de bande alignées dans la direction longitudinale X de la gaine, le long du bord longitudinal extérieur 10a.

Comme bien illustré à la figure 1 où la gaine de protection est illustrée maintenue ouverte, cette bande adhésive s'étend sur une portion de face interne 12 dont la largeur L est comprise entre 1/4 et la moitié de la largeur L₀ de la gaine 10. De préférence, cette bande adhésive 11 s'étend sur une portion de face interne 12 de largeur L égale à 1/3 de la largeur L₀ de la gaine 10.

Ici, cette bande adhésive est constituée d'un adhésif double-face. Une première face adhésive de la bande 11 est fixée à la face interne 12 du bord longitudinal extérieur 10a de la portion de recouvrement 13 et une seconde face adhésive est recouverte d'une pellicule de protection détachable 14.

Cette bande de protection détachable 14 évite que la bande adhésive ne vienne se coller contre des parties de gaine avant positionnement de celle-ci.

De manière connue, la pellicule de protection détachable 14 dépasse légèrement de la bande adhésive 11 elle-même de manière à faciliter le retrait de cette pellicule de protection 14 lors de la mise en place de la gaine sur un élément à protéger.

Comme bien illustré sur les figures 2 et 3, cette bande adhésive a une largeur L telle qu'en position fermée de la gaine, elle comprend une première portion 11a qui s'étend dans la portion de recouvrement 13 de la gaine et une seconde portion 11 b qui s'étend au-delà de cette portion de recouvrement 13.

Comme illustré à la figure 3, lorsque cette gaine est utilisée par exemple pour protéger un faisceau de câbles 15, la bande adhésive permet, après enlèvement de la pellicule de protection 14, de fixer les bords longitudinaux extérieur et intérieur 10a, 10b de la gaine l'un sur l'autre, dans la portion de recouvrement 13, grâce à la première portion 11a de la bande adhésive.

La seconde portion 11 b de la bande adhésive 11 permet dans un même temps de solidariser la gaine à une partie du faisceau de câbles 15 de telle sorte que toute translation de cette gaine 10 le long du faisceau de câbles 15 peut être soigneusement évitée.

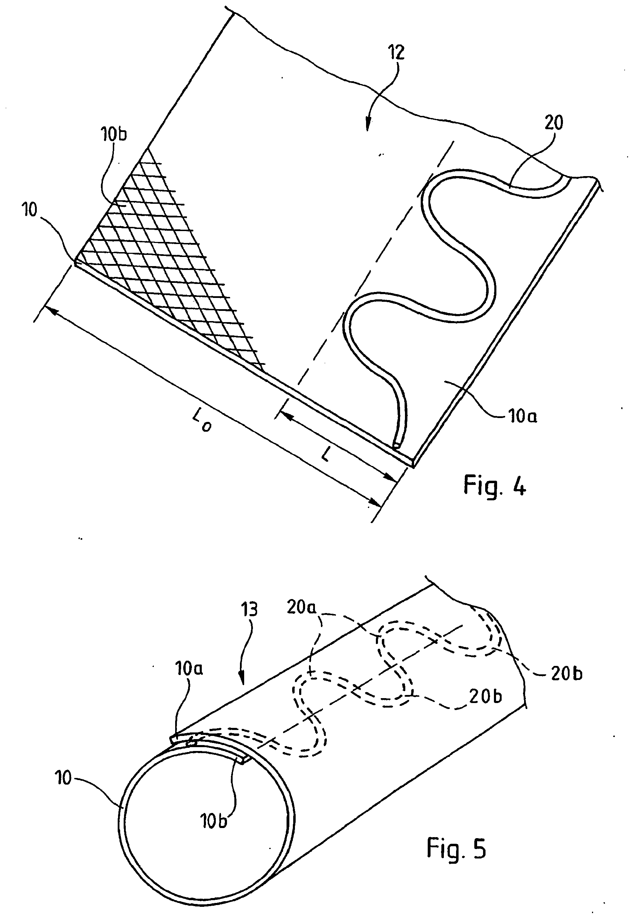

On va décrire à présent, en référence aux figures 4 et 5, un second mode de réalisation de la présente invention.

Il s'agit également ici d'une gaine 10 comme décrite précédemment qui est auto-fermable par recouvrement de telle sorte qu'un bord longitudinal extérieur 10a est adapté à recouvrir le bord longitudinal intérieur 10b.

Ici, les moyens adhésifs sont constitués d'un cordon adhésif 20 disposé suivant une courbe sinusoïdale dans la direction longitudinale X de la gaine 10.

Ils occupent également une portion de la face interne 12 de la bande dont la largeur L est comprise entre 1/4 et la moitié de la largeur L₀ de la gaine, et de préférence égale à environ 1/3 de cette largeur L₀ de la gaine 10.

Grâce à cette disposition sinusoïdale de l'adhésif, ce dernier comporte des premières portions de courbe 20a destinées à venir dans la portion de recouvrement 13 de la gaine, et des secondes portions de courbe 20b destinées à s'étendre au-delà de la portion de recouvrement 13.

Ici, ces moyens adhésifs sont constitués d'un adhésif d'un type thermo-activable, tel qu'un hotmelt. On obtient ainsi le collage par l'adhésif en chauffant cette partie de gaine après son montage autour de l'élément à protéger.

Comme bien illustré à la figure 5, les premières portions de courbe sinusoïdale 20a sont destinées à permettre la fixation du bord longitudinal extérieur 10a sur le bord longitudinal intérieur 10b de la gaine 10, afin d'assurer la fermeture de cette gaine même lorsqu'elle est fortement sollicitée.

Les secondes portions de courbe sinusoïdale 20b permettent de fixer la gaine 10 sur un élément allongé qu'elle protège, tel qu'un faisceau de câbles 15 illustré à figure 3.

On obtient ainsi une gaine de protection dont le montage et l'utilisation ne requiert pas l'utilisation d'accessoires pour assurer sa fermeture et son maintien en position sur un faisceau de câbles à protéger.

Grâce à la disposition judicieuse des moyens adhésifs, on obtient dans un même temps la fermeture certaine de la gaine et son maintien en place.

Bien entendu, de nombreuses modifications peuvent être apportées aux exemples de réalisation décrits ci-dessus sans sortir du cadre de l'invention.

En particulier, l'utilisation de cette gaine de protection refermable n'est pas limitée à la protection de faisceaux de câbles ou durits, mais peut permettre de protéger tout type d'éléments allongés.

Par ailleurs, la bande adhésive double-face 11 décrite précédemment pourrait également être remplacée par une bande réalisée en un adhésif du type thermo-activable, tel qu'un hotmelt.

Par ailleurs, les moyens adhésifs peuvent être constitués de plusieurs portions d'adhésifs reparties sur la face interne 12 de la gaine à proximité du bord longitudinal extérieur 10a de la gaine 10.

Enfin, bien que les exemples décrits concernent une gaine auto-fermable, l'invention concerne également tout type de gaine refermable par recouvrement.

## Revendications

1. Gaine de protection refermable par recouvrement, un bord longitudinal extérieur (10a) étant adapté à recouvrir un bord longitudinal intérieur (10b) de ladite gaine (10) dans une portion de recouvrement (13), ladite gaine comprenant des moyens adhésifs (11, 20) fixés sur une face interne (12) dudit bord longitudinal extérieur (10a), **caractérisée en ce que** lesdits moyens adhésifs (11, 20) ne s'étendent que sur une portion de face interne (12) de largeur (L) comprise entre 1/4 et la moitié de la largeur (L₀) de ladite gaine (10), ladite portion de face interne (12) étant adaptée à s'étendre au-delà de la portion de recouvrement (13).

2. Gaine de protection refermable conforme à la revendication 1, **caractérisée en ce que** lesdits moyens adhésifs (11, 20) ne s'étendent que sur une portion de face interne (12) de largeur (L) sensiblement égale à 1/3 de la largeur (L₀) de ladite gaine (10).

3. Gaine de protection refermable conforme à l'une des revendications 1 ou 2, **caractérisée en ce que** les moyens adhésifs (11, 20) sont constitués d'un adhésif double-face.

4. Gaine de protection refermable conforme à l'une des revendications 1 ou 2, **caractérisée en ce que** les moyens adhésifs (11, 20) sont du type thermo-activable.

5. Gaine de protection refermable conforme à l'une des revendications 1 à 4, **caractérisée en ce que** les moyens adhésifs sont constitués d'une bande adhésive (11) s'étendant dans la direction longitudinale (X) de la gaine (10), à proximité du bord libre (10'a) du bord longitudinal extérieur (10a) de la portion de recouvrement (13).

6. Gaine de protection refermable conforme à la revendication 5, **caractérisée en ce que** la bande adhésive (11) comporte une première face adhésive fixée à la face interne (12) du bord longitudinal extérieur (10a) de la portion de recouvrement (13) et une seconde face adhésive recouverte d'une pellicule de protection détachable (14).

7. Gaine de protection refermable conforme à l'une des revendications 1 à 4, **caractérisée en ce que** les moyens adhésifs sont constitués d'un cordon adhésif (20) disposé suivant une courbe sinusoïdale dans la direction longitudinale (X) de la gaine (10).

8. Utilisation d'une gaine de protection (10) refermable conforme à l'une des revendications 1 à 7, pour protéger au moins un élément allongé (15), et notamment un faisceau de câbles ou une conduite, **caractérisée en ce que** les moyens adhésifs (11, 20) sont adaptés d'une part à solidariser le bord longitudinal extérieur (10a) au bord longitudinal intérieur (10b) dans ladite portion de recouvrement (13) de gaine (10) et, d'autre part, à fixer ladite gaine (10) sur l'élément allongé (15).

## Patentansprüche

1. Schutzhülle, die durch Abdecken wiederverschließbar ist, wobei ein äußerer longitudinaler Rand (10a) dafür ausgelegt ist, einen inneren longitudinalen Rand (10b) der Hülle (10) in einem Abdeckabschnitt (13) abzudecken, wobei die Hülle Klebstoffmittel (11, 12) umfasst, die an einer inneren Fläche (12) des äußeren longitudinalen Randes (10a) befestigt sind, **dadurch gekennzeichnet, dass** sich die Klebstoffmittel (11, 12) nur über einen Abschnitt der inneren Fläche (12) mit Breite L im Bereich von 1/4 bis zur Hälfte der Breite (L₀) der Hülle (10) erstrecken, wobei der Abschnitt der Innenfläche (12) dafür ausgelegt ist, sich über den Abdeckabschnitt (13) hinaus zu erstrecken.

2. Wiederverschließbare Schutzhülle nach Anspruch 1, **dadurch gekennzeichnet, dass** sich die Klebstoffmittel (11, 12) nur über einen Abschnitt der Innenfläche (12) mit Breite L, die im Wesentlichen gleich 1/3 der Breite (L₀) der Hülle (10) ist, erstrecken.

3. Wiederverschließbare Schutzhülle nach einem der Ansprüche 1 oder 2, **dadurch gekennzeichnet, dass** die Klebstoffmittel (11, 12) aus einem doppelseitig wirkenden Klebstoff gebildet sind.

4. Wiederverschließbare Schutzhülle nach einem der Ansprüche 1 oder 2, **dadurch gekennzeichnet, dass** die Klebstoffmittel (11, 20) vom wärmeaktivierbaren Typ sind.

5. Wiederverschließbare Schutzhülle nach einem der Ansprüche 1 bis 4, **dadurch gekennzeichnet, dass** die Klebstoffmittel durch ein Klebeband (11) gebildet sind, das sich in Längsrichtung (X) der Hülle (10) in der Nähe des freien Randes (10'a) des äußeren longitudinalen Randes (10a) des Abdeckabschnitts (13) erstreckt.

6. Wiederverschließbare Schutzhülle nach Anspruch 5, **dadurch gekennzeichnet, dass** das Klebstoffband (11) eine erste Klebstofffläche, die an der Innenfläche (12) des äußeren longitudinalen Randes (10a) des Abdeckabschnitts (13) befestigt ist, und eine zweite Klebstofffläche, die mit einem ablösbaren Schutzüberzug (14) abgedeckt ist, umfasst.

7. Wiederverschließbare Schutzhülle nach einem der Ansprüche 1 bis 4, **dadurch gekennzeichnet, dass** die Klebstoffmittel durch einen Klebstoffstreifen (20) gebildet sind, der längs einer sinusförmigen Kurve in Längsrichtung (X) der Hülle (10) angeordnet ist.

8. Verwendung einer wiederverschließbaren Schutzhülle (10) nach einem der Ansprüche 1 bis 7, um wenigstens ein langgestrecktes Element (15), insbesondere einen Kabelstrang oder eine Leitung zu schützen, **dadurch gekennzeichnet, dass** die Klebstoffmittel (11, 20) dafür ausgelegt sind, einerseits den äußeren longitudinalen Rand (10a) an dem inneren longitudinalen Rand (10b) in dem Abdeckabschnitt (13) der Hülle (10) zu verbinden und andererseits die Hülle (10) an dem langgestreckten Element (15) zu befestigen.

## Claims

1. Protective sheath recloseable by overlapping, an exterior longitudinal edge (10a) being adapted to overlap an interior longitudinal edge (10b) of said sheath (10) in an overlapping portion (13), said sheath comprising adhesive means (11, 20) fixed to an internal face (12) of said exterior longitudinal edge (10a), **characterised in that** said adhesive means (11, 20) extend only over an internal face portion (12) of width (L) from 1/4 to half the width (L₀) of said sheath (10), said internal face portion (12) being adapted to extend beyond said overlapping portion (13).

2. Recloseable protective sheath according to claim 1, **characterised in that** said adhesive means (11, 20) extend only over an internal face portion (12) of width (L) substantially equal to 1/3 the width (L₀) of said sheath (10) .

3. Recloseable protective sheath according to either of claims 1 and 2, **characterised in that** the adhesive means (11, 20) consist of a double-sided adhesive.

4. Recloseable protective sheath according to either of claims 1 and 2, **characterised in that** the adhesive means (11, 20) are heat-activated.

5. Recloseable protective sheath according to any of claims 1 to 4, **characterised in that** the adhesive means consist of an adhesive tape (11) extending in the longitudinal direction (X) of the sheath (10) in the vicinity of the free edge (10'a) of the exterior longitudinal edge (10a) of the overlapping portion (13).

6. Recloseable protective sheath according to claim 5, **characterised in that** the adhesive tape (11) has a first adhesive side fixed to the internal face (12) of the exterior longitudinal edge (10a) of the overlapping portion (13) and a second adhesive side covered with a detachable protective film (14).

7. Recloseable protective sheath according to any of claims 1 to 4, **characterised in that** the adhesive means consist of an adhesive bead (20) disposed along a sinusoidal curve in the longitudinal direction (X) of the sheath (10).

8. Use of a recloseable protective sheath (10) according to any of claims 1 to 7 to protect at least one elongate member (15) and in particular a bundle of cables or a pipe, **characterised in that** said adhesive means (11, 20) are adapted firstly to fasten said exterior longitudinal edge (10a) to said interior longitudinal edge (10b) of the overlapping portion (13) of the sheath (10) and secondly to fix said sheath (10) to the elongate member (15) .
